(19) **Europäisches Patentamt**
**European Patent Office**
**Office européen des brevets**

(11) **EP 3 276 575 A1**

(12) **EUROPEAN PATENT APPLICATION**

(43) Date of publication:
**31.01.2018 Bulletin 2018/05**

(51) Int Cl.:
***G06T 7/33*** *(2017.01)*

(21) Application number: **17173576.4**

(22) Date of filing: **30.05.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **25.07.2016 CN 201610590192**

(71) Applicant: **Nuctech Company Limited
TongFang Building,
Shuangqinglu,
Haidian District
Beijing 100084 (CN)**

(72) Inventors:
• **ZHANG, Li
Beijing 100084 (CN)**
• **WANG, Sen
Beijing 100084 (CN)**
• **CHEN, Zhiqiang
Beijing 100084 (CN)**
• **XING, Yuxiang
Beijing 100084 (CN)**
• **JIN, Xin
Beijing 100084 (CN)**

(74) Representative: **Isarpatent
Patent- und Rechtsanwälte Behnisch Barth
Charles
Hassa Peckmann & Partner mbB
Friedrichstrasse 31
80801 München (DE)**

(54) **METHOD, APPARATUS AND SYSTEM FOR RECONSTRUCTING IMAGES OF 3D SURFACE**

(57)    The present disclosure discloses a method, an apparatus and a system for reconstructing an image of a three-dimensional surface. The method comprises the following steps of: constructing a three-dimensional model of the three-dimensional surface using X-ray imaging data obtained by imaging the three-dimensional surface with X-ray and extracting three-dimensional coordinate parameters of feature points; constructing one or more two-dimensional posture images of the three-dimensional surface using visible light imaging data obtained by imaging the three-dimensional surface with visible lights, and extracting two-dimensional coordinate parameters of feature points from each of the two-dimensional posture images; establishing a mapping relationship between the two-dimensional posture image and the three-dimensional model by matching the three-dimensional coordinate parameters and the two dimensional coordinate parameters of the feature points in each of the two-dimensional posture image; and filling the one or more two-dimensional posture image onto the three-dimensional model utilizing the mapping relationship established for each of the two dimensional posture images to form a reconstructed image of the three-dimensional surface, wherein the X-ray imaging data and the visible light imaging data of the three-dimensional surface along the same orientation are simultaneously captured.

200

constructing a three-dimensional model by using X-ray imaging data and extracting three-dimensional coordinate parameters of feature point — S210

constructing two-dimensional images by using visible light imaging data, and extracting two-dimensional coordinate parameters of feature points — S220

establishing a mapping relationship between the two-dimensional posture image and the three-dimensional model by matching — S230

filling two-dimensional posture images onto the three-dimensional model by utilizing the mapping relationship — S240

Figure2

**Description**

CROSS-REFERENCE TO RELATED APPLICATION(S)

This application claims priority to Chinese Application No.201610590192.5, filed on July 25, 2016, which is incorporated herein by reference in its entirety.

TECHNICAL FIELD

The present disclosure relates to the field of image reconstruction, and in particular to a method, apparatus and system for reconstructing an image of a three-dimensional surface.

BACKGROUND

It is a hot topic in medical treatment, security inspection, and exploration fields to reproduce images of three-dimensional objects by X-ray imaging. Especially in the medical field, there is a high requirement for the imaging accuracy and fine degree. For example, in the clinical practice of the dentistry, an oral CT machine is required to accurately reflect shape, size and depth differences of the teeth so as to allow surgeons to perform surgical operation more accurately and to reduce the unnecessary pain to the patient. Furthermore, for dental reshaping, if a more sophisticated and accurate oral model can be reconstructed, it facilitates more appropriate planning before surgery and also facilitates preoperative and postoperative comparisons to evaluate surgery effect.

There have been a lot of researches by researchers in this area. For example, B.S.Khambay et al. proposed a method of fitting three-dimensional face scanned images with CT bone tissue and soft tissue in the article of "a pilot study: 3D stereo photogrammetric image superimposition on to 3D CT scan images-the future of orthognathic surgery". Gerard Medioni et. al. propose a method of performing three-dimensional face reconstruction using a series of two-dimensional images in U.S. Patent No. 8,126,261 B2. Jongmoo Choi et al., also propose a method of identifying and reconstructing a three-dimensional face using facial feature pints in an article of "3D Face Reconstruction Using A Single or Multiple Views".

However, these works are still unsatisfactory. B.S. Khambay and other methods envisage obtaining three-dimensional face images relying on visible light surface scanning equipment joined with soft tissue surface obtained by CT to get the final results. In fact, the soft tissue surface of the CT image is actually a three-dimensional face surface, and repeated works are done to obtain the three-dimensional face surface utilizing the visible surface scanning device. Meanwhile, the process of joining the two three-dimensional surfaces will undoubtedly increases difficulty of positioning calibration points.

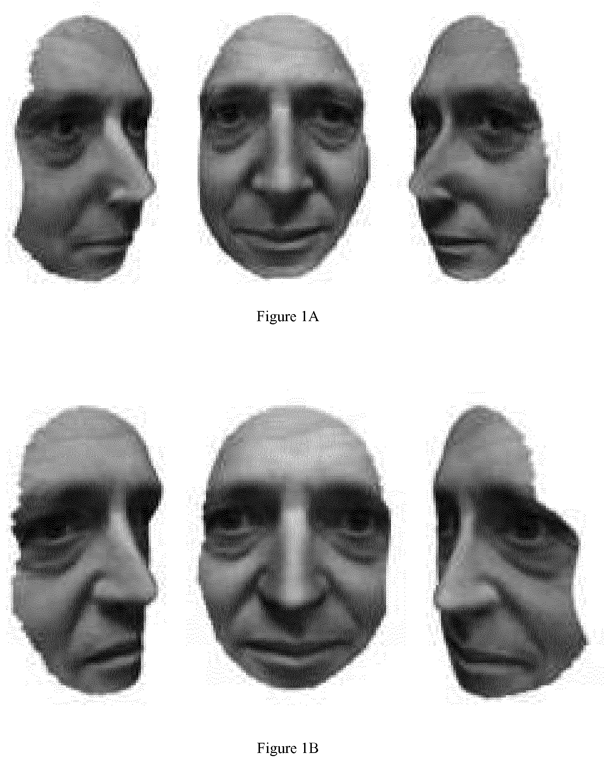

The two methods proposed by Gerard Medioni and Jongmoo Choi only depend on the three-dimensional positioning of some feature points of faces to deform the unified 3D face model. The results are representative of the facial features of the individual, but for some details such as nose with relatively large curvature and relatively fine component, feature point deformation sometimes get strange results. Taking the method of Jongmoo Choi as an example, figures 1A-1B show the results of the 3D face reconstruction implemented by Jongmoo Choi's paper of "3D Face Reconstruction Using A Single or Multiple Views". The reconstruction of the paper requires a single sheet of or multiple sheets of two-dimensional photographs and a general face model. The main work is to use the collected image feature points to finely tune the normal face model to achieve texture mapping to get three-dimensional face. The three pictures shown in figure 1A are three-dimensional faces with a single perspective combined with a normal human face model. The three pictures shown in figure 1B are three-dimensional faces with multi-angle estimation feature points that adjust the normal face model. It is apparent that there is a significant distortion in the vicinity of the nose in figure 1A. In Figure 1B, although the reconstruction of the nose has improved, it is still unsatisfactory, and the method failed to reconstruct the jaw area.

SUMMARY

In order to solve the above mentioned technical problems, the present disclosure provides a method, an apparatus and system for reconstructing an image of a three-dimensional surface.

According to one aspect of the present disclosure, there is provided a method for reconstructing an image of a three-dimensional surface, comprising: a1) constructing a three-dimensional model of the three-dimensional surface using X-ray imaging data obtained by imaging the three-dimensional surface with X-ray and extracting three-dimensional coordinate parameters of feature points; a2) constructing one or more two-dimensional posture images of the three-dimensional surface using visible light imaging data obtained by imaging the three-dimensional surface with visible lights, and extracting two-dimensional coordinate parameters of feature points from each of the two-dimensional posture images;

b) establishing a mapping relationship between the two-dimensional posture image and the three-dimensional model by matching the three-dimensional coordinate parameters and the two dimensional coordinate parameters of the feature points in each of the two-dimensional posture image; and c) filling the one or more two-dimensional posture images onto the three-dimensional model utilizing the mapping relationship established for each of the two dimensional posture images to form a reconstructed image of the three-dimensional surface, wherein the X-ray imaging data and the visible light imaging data of the three-dimensional surface along the same orientation are simultaneously captured.

In one embodiment, constructing a three-dimensional model of the three-dimensional surface in the step of a1) comprises: constructing a voxel model of the three-dimensional surface using the X-ray imaging data; extracting a profile of the voxel model layer by layer to obtain a three-dimensional surface point cloud; and constructing the three-dimensional model of the three-dimensional surface by establishing a connection relationship of the three-dimensional surface point cloud, wherein the three-dimensional model is a three-dimensional grid model.

In one embodiment, the visible light imaging data comprises a series of two-dimensional preliminary images generated in different orientations of the three-dimensional surface, and constructing one or more two-dimensional posture images of the three-dimensional surface in the step of a2) comprises: determining postures corresponding to each of the two-dimensional preliminary image by extracting a relative position of the preliminary feature points; and selecting the one or more two-dimensional posture images from the series of two-dimensional preliminary images based on the postures corresponding to each of the two-dimensional preliminary images.

In one embodiment, the preliminary feature point is selected from the set of feature points.

In one embodiment, in the step of b), determining the mapping matrix T between the two-dimensional posture image and the three-dimensional model by the following equation:

$$
\begin{bmatrix} u_1 & u_2 & & u_n \\ v_1 & v_2 & ... & v_n \\ 1 & 1 & & 1 \end{bmatrix} = T \begin{bmatrix} x_1 & x_2 & & x_n \\ y_1 & y_2 & & y_n \\ z_1 & z_2 & ... & z_n \\ 1 & 1 & & 1 \end{bmatrix},
$$

wherein $(u_i, v_i)$ and $(x_i, y_i, z_i)$ represent the two-dimensional coordinate parameter and the three-dimensional coordinate parameter of the i-th feature point among n feature points of the two-dimensional image, respectively, and i= 1,2, ... n.

In one embodiment, the mapping matrix is solved by least squares or singular value decomposition.

In one embodiment, filling the one or more two-dimensional posture images onto the three-dimensional model in the step of c) comprises: dividing the three-dimensional model into corresponding one or more partitions according to the one or more two-dimensional posture images; and filling the one or more two-dimensional posture images onto the corresponding one or more partitions to form the reconstructed three-dimensional surface image.

According to another aspect of the present disclosure, there is provided an apparatus for reconstructing an image of a three-dimensional surface, comprising: a three-dimensional module constructing unit configured for constructing a three-dimensional model of the three-dimensional surface using X-ray imaging data obtained by imaging the three-dimensional surface with X-ray and extracting three-dimensional coordinate parameters of feature points; a two-dimensional posture image constructing unit configured for constructing one or more two-dimensional posture images of the three-dimensional surface using visible light imaging data obtained by imaging the three-dimensional surface with visible lights, and extracting two-dimensional coordinate parameters of feature points from each of the two-dimensional posture images; a mapping establishing unit configured for establishing a mapping relationship between the two-dimensional posture image and the three-dimensional model by matching the three-dimensional coordinate parameters and the two dimensional coordinate parameters of the feature points in each of the two-dimensional posture image; and a reconstructing unit configured for filling the one or more two-dimensional posture images onto the three-dimensional model utilizing the mapping relationship established for each of the two dimensional posture images to form a reconstructed image of the three-dimensional surface, wherein the X-ray imaging data and the visible light imaging data of the three-dimensional surface along the same orientation are simultaneously captured.

In one embodiment, the three-dimensional module constructing unit is configured for: constructing a voxel model of the three-dimensional surface using the X-ray imaging data; extracting a profile of the voxel model layer by layer to obtain a three-dimensional surface point cloud; and constructing the three-dimensional model of the three-dimensional surface by establishing a connection relationship of the three-dimensional surface point cloud ,wherein the three-dimensional model is a three-dimensional grid model.

In one embodiment, the visible light imaging data comprises a series of two-dimensional preliminary images generated in different orientations of the three-dimensional surface, and the two-dimensional posture image constructing unit is configured for: determining postures corresponding to each of the two-dimensional preliminary image by extracting a relative position of the preliminary feature points; and selecting the one or more two-dimensional posture images from the series of two-dimensional preliminary images based on the postures corresponding to each of the two-dimensional preliminary images.

In one embodiment, the preliminary feature point is selected from the set of feature points.

In one embodiment, the mapping establishing unit is configured for determining the mapping matrix T between the two-dimensional posture image and the three-dimensional model by the following equation:

$$\begin{bmatrix} u_1 & u_2 & & u_n \\ v_1 & v_2 & ... & v_n \\ 1 & 1 & & 1 \end{bmatrix} = T \begin{bmatrix} x_1 & x_2 & & x_n \\ y_1 & y_2 & & y_n \\ z_1 & z_2 & ... & z_n \\ 1 & 1 & & 1 \end{bmatrix},$$

wherein $(u_i, v_i)$ and $(x_i, y_i, z_i)$ represent the two-dimensional coordinate parameter and the three-dimensional coordinate parameter of the i-th feature point among n feature points of the two-dimensional image, respectively, and i= 1,2, ... n.

In one embodiment, the mapping establishing unit is configured for solving the mapping matrix by least squares or singular value decomposition.

In one embodiment, the reconstructing unit is configured for: dividing the three-dimensional model into corresponding one or more partitions according to the one or more two-dimensional posture images; and filling the one or more two-dimensional posture images onto the corresponding one or more partitions to form the reconstructed three-dimensional surface image.

According to a further aspect of the present disclosure, there is provided a system for reconstructing an image of a three-dimensional surface, comprising: an X-ray imaging device configured to move around the three-dimensional surface for irradiating the three-dimensional surface with the X-ray to generate an X-ray image data; a visible light imaging device located in the same orientation as that of the X-ray imaging device on the three-dimensional surface, and configured to move around the three-dimensional surface synchronously with the X-ray imaging device to generate a visible light imaging data; and the apparatus for reconstructing an image of a three-dimensional surface according to any one of the above mentioned technical solutions.

The method, apparatus and system for reconstructing an image of a three-dimensional surface proposed by the present disclosure may reconstruct a three-dimensional surface more finely and accurately, so as to achieve rich and detailed implementation in various fields such as the medical field.

BRIEF DESCRIPTION OF THE DRAWINGS

Figures 1A-1B show results of reconstructing an image of a three-dimensional surface according to a conventional method;

Figure 2 shows a flow chart of a method for reconstructing an image of a three-dimensional surface according to the present disclosure;

Figure 3 shows a schematic view of a profile for extracting voxel model layer by layer according to one embodiment;

Figure 4 shows a schematic view for establishing a three-dimensional surface point cloud according to one embodiment;

Figure 5 shows a schematic view of a process for extracting feature points;

Figure 6 shows the two-dimensional posture of the three-dimensional surface after posture mapping and the corresponding two-dimensional posture images;

Figure 7 shows an exemplary result of reconstructing a three-dimensional surface by the method of Figure 2;

Figure 8 shows a schematic view of a system including an X-ray imaging device for acquiring X-ray imaging data and a visible light imaging device for acquiring visible light imaging data;

Figure 9 shows a block diagram of an apparatus for reconstructing an image of a three-dimensional surface according to the present disclosure;

Figure 10 shows a schematic diagram of a system for reconstructing an image of a three-dimensional surface according to the present disclosure.

## DETAILED DESCRIPTION OF PREFERRED EMBODIMENTS

The present disclosure will be described in detail with reference to the accompanying drawings. It should be noted that in the following description, a specific three-dimensional surface (e.g., a specific human face) is used in the description of a particular embodiment for the purpose of describing convenience and for the purpose of facilitating reader's to understand the spirit and effects of the present disclosure. However, the present disclosure is not limited to any three-dimensional surface having a specific shape and/or feature. In the following description, when particular embodiments are illustrated, certain specific devices or specific algorithms or techniques are employed to implement some of the specific features of the present disclosure, and this is for the sake of convenience of description and/or understanding, and is not utilized to limit the present disclosure. In the implementation of the technical solution of the present disclosure, any apparatus, algorithm and/or technique having the corresponding capabilities and/or capable of achieving the corresponding effects can be used in the practice of the present disclosure, the scope of which is defined by the claims.

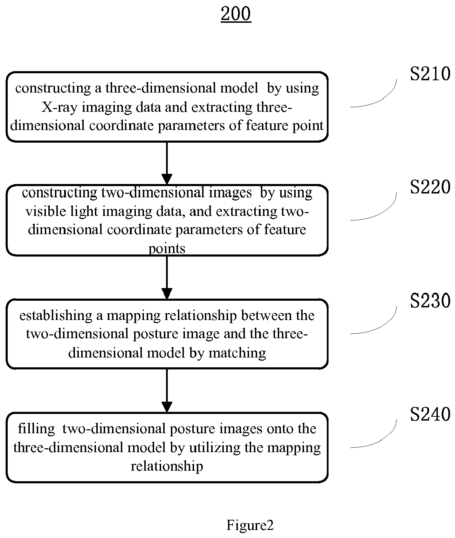

First of all, figure 2 shows a flow chart of a method 200 for reconstructing an image of a three-dimensional surface according to one embodiment of the present disclosure. The method 200 starts at a step of S210 by constructing a three-dimensional model of the three-dimensional surface using X-ray imaging data obtained by imaging the three-dimensional surface with X-ray and by extracting three-dimensional coordinate parameters of feature points. Then, at a step of S220, one or more two-dimensional posture images of the three-dimensional surface are constructed using visible light imaging data obtained by imaging the three-dimensional surface with visible lights, and two-dimensional coordinate parameters of feature points are extracted from each of the two-dimensional posture images. In the following, at a step of S230, a mapping relationship between the two-dimensional posture image and the three-dimensional model is established by matching the three-dimensional coordinate parameters and the two dimensional coordinate parameters of the feature points in each of the two-dimensional posture image. Finally, at a step of S240, the one or more two-dimensional posture images is filled onto the three-dimensional model utilizing the mapping relationship established for each of the two dimensional posture images to form a reconstructed image of the three-dimensional surface. In the method 200, the X-ray imaging data and the visible light imaging data of the three-dimensional surface along the same orientation are simultaneously captured.

In the step of S210, the three-dimensional model of the three-dimensional surface is constructed utilizing the X-ray imaging data for X-ray imaging the three-dimensional surface, and the three-dimensional coordinate parameter of the feature point is extracted.

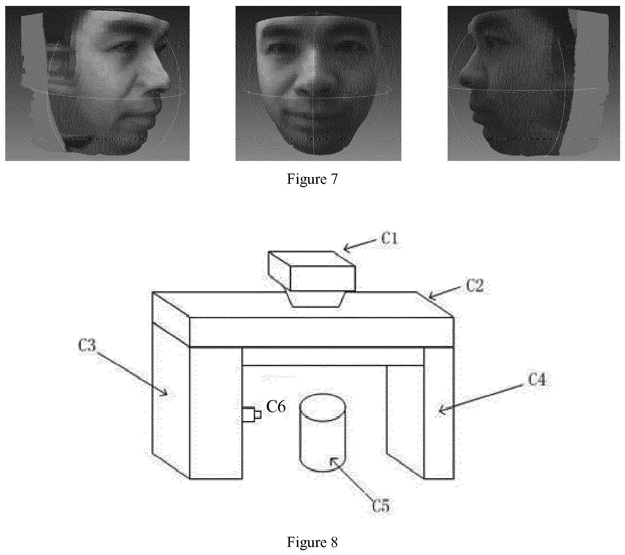

As a basis, the X-ray imaging data is required. The X-ray imaging data is obtained by an X-ray imaging device, for example, various CT devices (for example, an oral CT machine), a general X-ray machine, and a flat panel detector, etc., as long as the X-ray image data of the target three-dimensional surface can be obtained. The X-ray imaging device moves around the three-dimensional surface when acquiring X-ray imaging data so as to completely acquire the X-ray imaging data of the three-dimensional surface. Figure 8 shows a schematic view of a system including an X-ray imaging device. As shown figure 8, C1 is a pillar, through which the system is fixed to the ground, walls or roof. C2 is cantilever and can be rotated about a connecting shaft with C1. C3 is an X-ray machine and C4 is a flat-panel detector. In use, the three-dimensional surface is between C3 and C4, and is expressed as C5. The cantilever C2 rotates around the axis to complete the scanning and imaging of the three-dimensional surface.

In the step of S210, it is preferable to firstly construct a three-dimensional voxel model using the acquired X-ray imaging data (including but not limited to X-ray attenuation information) using a CT technique, which may utilize a number of mature reconstruction algorithms such as FDK, ART, etc.

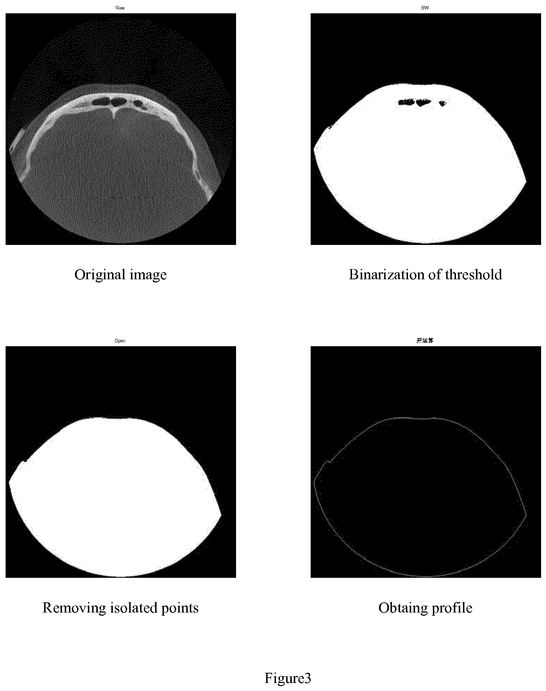

Then, a profile of the voxel model is extracted layer by layer to obtain a three-dimensional surface point cloud. The three-dimensional voxel model is hierarchical, and a gray scale of each voxels is related to a magnitude of the attenuation coefficient at such a position. The gray scales for the regions with similar attenuation coefficients are similar to each other, and the regions with sharply changed attenuation coefficients form the edge region. Since the change of the attenuation coefficients off the facial muscle and the air are huge, the edge may be extracted to get coordinates of the face contour. Figure 3 shows a schematic view of a profile for extracting voxel model layer by layer according to one embodiment, wherein the profiles are obtained by a binarization of threshold, removing isolated points, etc on the basis of original pictures. It should be pointed out that the respective processes shown in figure 3 is merely an example and does not imply a necessary process for extracting the profiles of the voxel model.

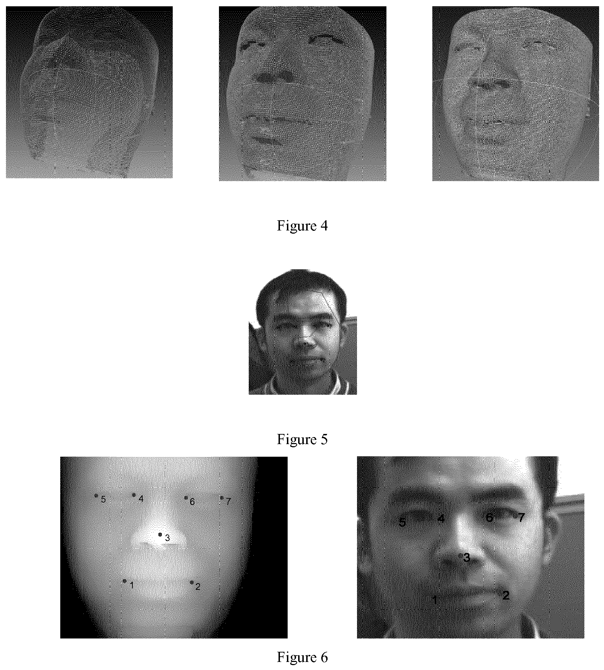

Finally, the three-dimensional model of the three-dimensional surface is constructed by establishing a connection relationship of the three-dimensional surface point cloud, wherein the three-dimensional model is a three-dimensional grid model. Such a process may be implemented using computer graphics algorithms, such as the ball-pivoting algorithm. Figure 4 shows a schematic view for establishing a three-dimensional surface point cloud according to one embodiment, in which the left one is a schematic view of the three-dimensional surface point cloud, the middle one shows a triangular model for establishing the connection relationship, and the right one is a refined triangle model. It should be further pointed out that the method for establishing a three-dimensional surface point cloud shown in figure 4 is merely an example and is not intended to limit the scheme of the present disclosure.

In the step of S210, it is also necessary to extract the three-dimensional coordinate parameters of the feature points, which may include but may be not limited to nasal tip, angulus oris, canthus, facial profile and the like.

Next, in the step of S220, one or more two-dimensional posture images of the three-dimensional surface are constructed using visible light imaging data for visible light imaging of the three-dimensional surface, and two dimensional coordinate parameters of the feature points are extracted from each of the two-dimensional postures images.

As a basis for such a step, it is necessary to obtain visible light imaging data. The visible light data may be obtained by a visible light imaging device, such as a camera, a pick-up head or the like, as long as the visible light image data of the target three-dimensional surface can be obtained. The visible light imaging device is positioned in the same orientation as that of the X-ray imaging device on the three-dimensional surface and moves around the three-dimensional surface in synchronism with the X-ray imaging device when acquiring visible light imaging data, so as to acquire imaging data in different orientations of the three-dimensional surface in synchronism with the X-ray imaging device. In one embodiment, the visible light imaging data is a series of two-dimensional preliminary images generated in different orientations of the three-dimensional surface. It will also be seen again that the system of figure 8 and the system of figure 8 also includes a visible light imaging device C6.

In the step of S220, it is preferable that the posture corresponding to each of the two-dimensional preliminary images may be firstly determined by extracting relative positions of the preliminary feature points. Since the orientation of the three-dimensional surface (such as a human face) is not known, for example, the orientation of the face is positive, it is often not possible to automatically determine the posture of the three-dimensional surface corresponding to the preliminary image according to the order of each of the preliminary images in a series of two-dimensional preliminary images (e.g. for a human face, there may be a positive posture, a positive left posture, a positive right posture, a 45 ° oblique posture, etc.). Consequently, in such a process, the relative position of the so-called preliminary feature points in each of the two-dimensional preliminary images are labeled to determine the posture of each images. Such a process may be implemented by an active shape model (ASM) algorithm. Figure 5 shows a schematic view of a process for extracting feature points.

The preliminary feature point may be the same as the feature point as mentioned in the step of S210 or may be a more preferred feature point selected from the set of feature points. In another embodiment, the preliminary feature point may include a feature point other than the set of feature points.

Next, the one or more two-dimensional posture images are selected from the series of two-dimensional preliminary images according to the postures corresponding to each of the two-dimensional preliminary images. The two-dimensional image is used to fill the three-dimensional model in the following steps, and not every two-dimensional preliminary image is used to fill. In one embodiment, different postures of the three-dimensional surface are selected, and two-dimensional preliminary images with corresponding different postures are selected from the series of two-dimensional preliminary images for filling. These images are also referred to as two-dimensional posture images.

In the step of S220, it is also necessary to extract the two-dimensional coordinate parameters of the feature points from each of the two-dimensional posture images. The feature points herein belong to the set of feature points in the step of S210 and may include, but are not limited to nasal tip, angulus oris, canthus, facial profile and the like. It should be pointed out that one two-dimensional posture image generally does not include all of the feature points in the set of feature points in the step of S210. For example, a two-dimensional posture image of human face corresponding to the positive-right posture does not include the feature points of left canthus.

Then, in the step of S230, a mapping relationship (T) between the two-dimensional posture image and the three-dimensional model is established by matching the three-dimensional coordinate parameters and the two dimensional coordinate parameters of the feature points in each of the two-dimensional posture images.

In the above steps, spatial structure information may be obtained from the X-ray imaging data, and the visible image data may reflect the plane texture information, the two of which may be joined to obtain a visualized three-dimensional surface, and need to be mapped (T) based on space mapping relationship of the feature point.

In general, homogeneous coordinates of a feature point for one three-dimensional surface may be represented

as $\overrightarrow{X} = \left[ x_1, y_1, z_1, 1 \right]^T$; after the mapping of T, the coordinate point on the corresponding two-dimensional image is

$\tilde{X} = [u_1, v_1, 1]$, i.e $\tilde{X} = T\overrightarrow{X}$.

For ease of understanding, the mapping T may be divided into two processes to explain, the first one of which is a posture mapping, and the second one of which is an affine transformation, and the mapping T is a combined result of the two types of mapping.

The posture mapping refers to a matching relationship between the three-dimensional surface and the two-dimensional posture surface of visible light imaging in the spatial posture. That is, the posture mapping rotates the three-dimensional surface model in space so that the projection in the imaging plane is consistent with the two-dimensional posture surface. By taking the positive surface posture (the imaging surface of which is an x-y plane) as an example, figure 6 shows the two-dimensional posture of the three-dimensional surface after posture mapping (left image) and the corresponding two-dimensional posture images (right image), the mapping matrix of which is shown as follows:

$$\begin{bmatrix} x \\ y \\ 1 \end{bmatrix} = \begin{bmatrix} 1 & 0 & 0 & 0 \\ 0 & 1 & 0 & 0 \\ 0 & 0 & 0 & 1 \end{bmatrix} \begin{bmatrix} x_1 \\ y_1 \\ z_1 \\ 1 \end{bmatrix}.$$

As can be seen from the figure, both of the postures completely correspond to each other.

The second one is the affine transformation. The relationship between the individual pixels of the two frames of two-dimensional images is a simple affine transformation relationship, which is related to the parameters of the device used for visible light imaging:

$$\begin{bmatrix} u_1 \\ v_1 \\ 1 \end{bmatrix} = \begin{bmatrix} * & * & * \\ * & * & * \\ 0 & 0 & 1 \end{bmatrix} \begin{bmatrix} x \\ y \\ 1 \end{bmatrix},$$

In which, $[u_1,v_1,1]^T$ are coordinates of the pixels on the visible light, $[u_1,y,1]^T$ are coordinates of the point cloud of the three-dimensional surface model after posture mapping, and * is a parameter to be fitted and mainly represents translation and rotation of the coordinate system.

The two processes are linked to each other to obtain a following equation:

$$\begin{bmatrix} u_1 \\ v_1 \\ 1 \end{bmatrix} = \begin{bmatrix} * & * & * \\ * & * & * \\ 0 & 0 & 1 \end{bmatrix} \begin{bmatrix} x \\ y \\ 1 \end{bmatrix} = \begin{bmatrix} * & * & * \\ * & * & * \\ 0 & 0 & 1 \end{bmatrix} \cdot \begin{bmatrix} 1 & 0 & 0 & 0 \\ 0 & 1 & 0 & 0 \\ 0 & 0 & 0 & 1 \end{bmatrix} \begin{bmatrix} x_1 \\ y_1 \\ z_1 \\ 1 \end{bmatrix},$$

$$\tilde{X} = T_1(c)_{3\times3} \cdot T_2(\theta)_{3\times4} \overrightarrow{X} = T\overrightarrow{X}.$$

It is apparent that the mapping T represents two parts, one part of which is $T_1(c)_{3\times3}$ related to the parameters of the visible light imaging device and the other part of which is $T_2(\theta)_{3\times4}$ related to the surface posture.

The above description is the mechanism of mapping T. In practical applications, the mapping matrix T between the two-dimensional posture image and the three-dimensional model is often determined by a similar following equation:

$$\begin{bmatrix} u_1 & u_2 & & u_n \\ v_1 & v_2 & ... & v_n \\ 1 & 1 & & 1 \end{bmatrix} = T \begin{bmatrix} x_1 & x_2 & & x_n \\ y_1 & y_2 & & y_n \\ z_1 & z_2 & ... & z_n \\ 1 & 1 & & 1 \end{bmatrix},$$

In which, $(u_i, v_i)$ and $(x_i, y_i, z_i)$ represent the two-dimensional coordinate parameter and the three-dimensional coordinate parameter of the i-th feature point among n feature points of the two-dimensional image, respectively, and i= 1,2, ... n. In one embodiment, the mapping matrix T in the above equation may be solved by least squares or singular value decomposition.

Finally, in the step of S240, the one or more two-dimensional posture images are filled onto the three-dimensional model utilizing the mapping relationship established for each of the two dimensional posture images to form a reconstructed image of the three-dimensional surface.

In one embodiment, in such a step, the three-dimensional model may be divided into corresponding one or more partitions according to the selected two-dimensional posture images; and the one or more two-dimensional posture images are filled onto the corresponding one or more partitions to form the reconstructed three-dimensional surface image. Of course, the partition may be pre-divided and the two-dimensional posture image may be selected based on the divided partition, which does not affect the technical effect of the present disclosure.

In another embodiment, the partitions may not be divided. For the overlapped portions of the selected different two-dimensional posture images, the data may be fitted and the overlapped portions are filled with the fitted data.

Finally, figure 7 shows an exemplary result of reconstructing a three-dimensional surface by the method 200 of the present disclosure. As mentioned above, such a method utilizes combination of the visible image and the X-ray imaging data, which is superior to the effect achieved by the method shown in figure 1 in the visual effect, and the reconstruction of the jaw area is realized in the method. The method may directly generates a customized three-dimensional face model and improves the reliability without being limited by the general three-dimensional model (such as the general face model selected in the method of figure 1).

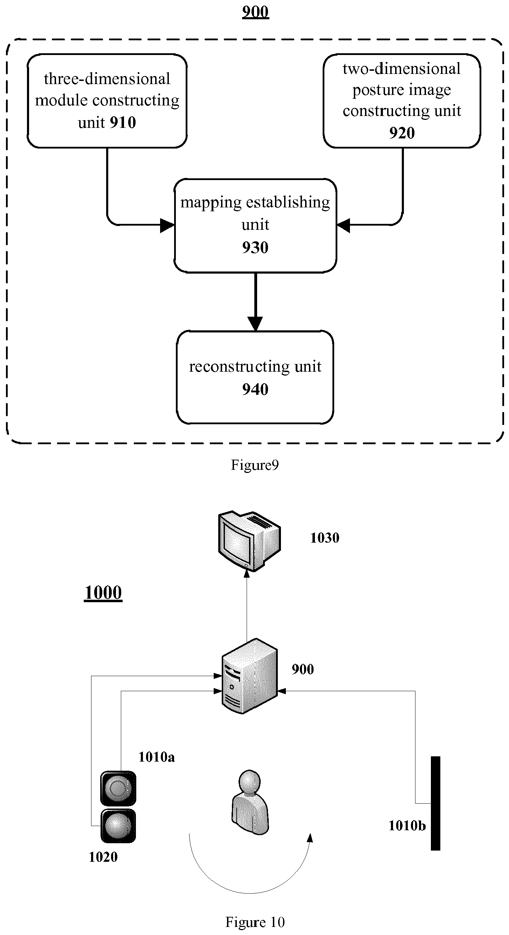

In the following, figure 9 shows a block diagram of an apparatus 900 for reconstructing an image of a three-dimensional surface according to the present disclosure.

According to another aspect of the present disclosure, the apparatus comprises a three-dimensional module constructing unit 910, a two-dimensional posture image constructing unit 920, a mapping establishing unit 930 and a reconstructing unit 940. The three-dimensional module constructing unit 910 is configured for constructing a three-dimensional model of the three-dimensional surface using X-ray imaging data obtained by imaging the three-dimensional surface with X-ray and extracting three-dimensional coordinate parameters of feature points. The two-dimensional posture image constructing unit 920 is configured for constructing one or more two-dimensional posture images of the three-dimensional surface using visible light imaging data obtained by imaging the three-dimensional surface with visible lights, and extracting two-dimensional coordinate parameters of feature points from each of the two-dimensional posture images. The mapping establishing unit 930 is configured for establishing a mapping relationship between the two-dimensional posture image and the three-dimensional model by matching the three-dimensional coordinate parameters and the two dimensional coordinate parameters of the feature points in each of the two-dimensional posture image. The reconstructing unit 940 is configured for filling the one or more two-dimensional posture images onto the three-dimensional model utilizing the mapping relationship established for each of the two dimensional posture images to form a reconstructed image of the three-dimensional surface. The X-ray imaging data and the visible light imaging data utilized by the apparatus 900 satisfy the following conditions, in which the X-ray imaging data and the visible light imaging data of the three-dimensional surface along the same orientation are simultaneously captured.

The apparatus 900 for reconstructing an image of a three-dimensional surface corresponds to the method 200 for reconstructing an image of a three-dimensional surface. The particular description and explanation for the method 200 may be applied to the apparatus 900, and here is omitted for brevity.

Figure 10 shows a schematic diagram of a system 1000 for reconstructing an image of a three-dimensional surface. The system 1000 comprises an X-ray imaging device 1010, a visible light imaging device 1020 and the apparatus 900 as shown in figure 9. The X-ray imaging device 1010 is configured to move around the three-dimensional surface for irradiating the three-dimensional surface with the X-ray to generate an X-ray image data. The visible light imaging device 1020 is located in the same orientation as that of the X-ray imaging device on the three-dimensional surface, and is configured to move around the three-dimensional surface synchronously with the X-ray imaging device to generate a visible light imaging data. In figure 10, it shows that the X-ray imaging device 1010 includes an X-ray irradiation device 1010a and an X-ray receiving device 1010b.

It should be pointed out that in the above description, although the X-ray imaging device 1010 and the visible light imaging apparatus 1020 are described as moving around a three-dimensional surface, it may also be realized that the three-dimensional surface is moved around the X-ray imaging device 1010 and the visible light imaging apparatus 1020, or the three-dimensional surface rotates itself or the three-dimensional surface, the X-ray imaging device 1010 and the visible light imaging device 1020 all rotate around the other target, as long as the synchronization of the X-ray imaging data and the visible light imaging data can be ensured.

In one embodiment, the system 1000 may also include a display (1030 in FIG. 10) for displaying the reconstructed three-dimensional image.

While the present disclosure has been shown in connection with the preferred embodiments of the present disclosure, it will be understood by those skilled in the art that various modifications, substitutions, and alterations may be made therein without departing from the spirit and scope of the disclosure. Accordingly, the disclosure should not be limited by the above-described embodiments, but should be defined by the appended claims and their equivalents.

**Claims**

1. A method for reconstructing an image of a three-dimensional surface, comprising:

   a1) constructing a three-dimensional model of the three-dimensional surface using X-ray imaging data obtained by imaging the three-dimensional surface with X-ray and extracting three-dimensional coordinate parameters of feature points;
   a2) constructing one or more two-dimensional posture images of the three-dimensional surface using visible light imaging data obtained by imaging the three-dimensional surface with visible lights, and extracting two-dimensional coordinate parameters of feature points from each of the two-dimensional posture images;
   b) establishing a mapping relationship between the two-dimensional posture image and the three-dimensional model by matching the three-dimensional coordinate parameters and the two dimensional coordinate parameters of the feature points in each of the two-dimensional posture image; and
   c) filling the one or more two-dimensional posture images onto the three-dimensional model utilizing the mapping relationship established for each of the two dimensional posture images to form a reconstructed image of the three-dimensional surface,

   wherein the X-ray imaging data and the visible light imaging data of the three-dimensional surface along a same orientation are simultaneously captured.

2. The method according to claim 1, wherein the constructing a three-dimensional model of the three-dimensional surface in the step of a1) comprises:

   constructing a voxel model of the three-dimensional surface using the X-ray imaging data;
   extracting a profile of the voxel model layer by layer to obtain a three-dimensional surface point cloud; and
   constructing the three-dimensional model of the three-dimensional surface by establishing a connection relationship of the three-dimensional surface point cloud ,wherein the three-dimensional model is a three-dimensional grid model.

3. The method according to claim 1, wherein the visible light imaging data comprises a series of two-dimensional preliminary images generated in different orientations of the three-dimensional surface, and the constructing one or more two-dimensional posture images of the three-dimensional surface in the step of a2) comprises:

   determining postures corresponding to each of the two-dimensional preliminary image by extracting a relative position of the preliminary feature points; and
   selecting the one or more two-dimensional posture images from the series of two-dimensional preliminary images based on the postures corresponding to each of the two-dimensional preliminary images.

4. The method according to claim 3, wherein the preliminary feature point is selected from a set of feature points.

5. The method according to claim 1, wherein in the step of b), determining the mapping matrix T between the two-dimensional posture image and the three-dimensional model by the following equation:

$$
\begin{bmatrix} u_1 & u_2 & & u_n \\ v_1 & v_2 & \ldots & v_n \\ 1 & 1 & & 1 \end{bmatrix} = T \begin{bmatrix} x_1 & x_2 & & x_n \\ y_1 & y_2 & & y_n \\ z_1 & z_2 & \ldots & z_n \\ 1 & 1 & & 1 \end{bmatrix},
$$

wherein $(u_i, v_i)$ and $(x_i, y_i, z_i)$ represent the two-dimensional coordinate parameter and the three-dimensional coordinate parameter of the i-th feature point among n feature points of the two-dimensional image, respectively, and i= 1,2, ... n.

6. The method according to claim 5, wherein the mapping matrix is solved by least squares or singular value decomposition.

7. The method according to claim 1, wherein the filling the one or more two-dimensional posture images onto the three-dimensional model in the step of c) comprises:

   dividing the three-dimensional model into corresponding one or more partitions according to the one or more two-dimensional posture images; and
   filling the one or more two-dimensional posture images onto the corresponding one or more partitions to form the reconstructed three-dimensional surface image.

8. An apparatus for reconstructing an image of a three-dimensional surface, comprising:

   a three-dimensional module constructing unit configured for constructing a three-dimensional model of the three-dimensional surface using X-ray imaging data obtained by imaging the three-dimensional surface with X-ray and extracting three-dimensional coordinate parameters of feature points;
   a two-dimensional posture image constructing unit configured for constructing one or more two-dimensional posture images of the three-dimensional surface using visible light imaging data obtained by imaging the three-dimensional surface with visible lights, and extracting two-dimensional coordinate parameters of feature points from each of the two-dimensional posture images;
   a mapping establishing unit configured for establishing a mapping relationship between the two-dimensional posture image and the three-dimensional model by matching the three-dimensional coordinate parameters and the two dimensional coordinate parameters of the feature points in each of the two-dimensional posture image; and
   a reconstructing unit configured for filling the one or more two-dimensional posture images onto the three-dimensional model utilizing the mapping relationship established for each of the two dimensional posture images to form a reconstructed image of the three-dimensional surface,
   wherein the X-ray imaging data and the visible light imaging data of the three-dimensional surface along a same orientation are simultaneously captured.

9. The apparatus according to claim 8, wherein the three-dimensional module constructing unit is configured for:

   constructing a voxel model of the three-dimensional surface using the X-ray imaging data;
   extracting a profile of the voxel model layer by layer to obtain a three-dimensional surface point cloud; and
   constructing the three-dimensional model of the three-dimensional surface by establishing a connection relationship of the three-dimensional surface point cloud ,wherein the three-dimensional model is a three-dimensional grid model.

10. The apparatus according to claim 8, wherein the visible light imaging data comprises a series of two-dimensional preliminary images generated in different orientations of the three-dimensional surface, and the two-dimensional posture image constructing unit is configured for:

   determining postures corresponding to each of the two-dimensional preliminary image by extracting a relative position of the preliminary feature points; and
   selecting the one or more two-dimensional posture images from the series of two-dimensional preliminary images based on the postures corresponding to each of the two-dimensional preliminary images.

11. The apparatus according to claim 10, wherein the preliminary feature point is selected from a set of feature points.

12. The apparatus according to claim 8, wherein the mapping establishing unit is configured for determining the mapping matrix T between the two-dimensional posture image and the three-dimensional model by the following equation:

$$
\begin{bmatrix} u_1 & u_2 & & u_n \\ v_1 & v_2 & \cdots & v_n \\ 1 & 1 & & 1 \end{bmatrix} = T \begin{bmatrix} x_1 & x_2 & & x_n \\ y_1 & y_2 & & y_n \\ z_1 & z_2 & \cdots & z_n \\ 1 & 1 & & 1 \end{bmatrix},
$$

wherein $(u_i, v_i)$ and $(x_i, y_i, z_i)$ represent the two-dimensional coordinate parameter and the three-dimensional coordinate parameter of the i-th feature point among n feature points of the two-dimensional image, respectively, and i= 1,2, ... n.

13. The apparatus according to claim 12, wherein the mapping establishing unit is configured for solving the mapping matrix by least squares or singular value decomposition.

14. The apparatus according to claim 8, wherein the reconstructing unit is configured for:

dividing the three-dimensional model into corresponding one or more partitions according to the one or more two-dimensional posture images; and
filling the one or more two-dimensional posture images onto the corresponding one or more partitions to form the reconstructed three-dimensional surface image.

15. A system for reconstructing an image of a three-dimensional surface, comprising:

an X-ray imaging device configured to move around the three-dimensional surface for irradiating the three-dimensional surface with the X-ray to generate an X-ray image data;
a visible light imaging device located in the same orientation as the X-ray imaging device on the three-dimensional surface, and configured to move around the three-dimensional surface synchronously with the X-ray imaging device to generate a visible light imaging data; and
an apparatus for reconstructing an image of a three-dimensional surface according to any one of claims 8 to 14.

Figure 1A

Figure 1B

<u>200</u>

```
┌─────────────────────────────────────────┐          ⌇ S210
│  constructing a three-dimensional model  │
│   by using X-ray imaging data and        │
│   extracting three-dimensional           │
│   coordinate parameters of feature point │
└─────────────────────────────────────────┘
                    │
                    ▼
┌─────────────────────────────────────────┐          ⌇ S220
│  constructing two-dimensional images     │
│   by using visible light imaging data,   │
│   and extracting two-dimensional         │
│   coordinate parameters of feature       │
│   points                                 │
└─────────────────────────────────────────┘
                    │
                    ▼
┌─────────────────────────────────────────┐          ⌇ S230
│  establishing a mapping relationship     │
│   between the two-dimensional posture    │
│   image and the three-dimensional        │
│   model by matching                      │
└─────────────────────────────────────────┘
                    │
                    ▼
┌─────────────────────────────────────────┐          ⌇ S240
│  filling two-dimensional posture images  │
│   onto the three-dimensional model by    │
│   utilizing the mapping relationship     │
└─────────────────────────────────────────┘
```

Figure2

Original image

Binarization of threshold

Removing isolated points

Obtaing profile

Figure3

Figure 4

Figure 5

Figure 6

Figure 7

Figure 8

900

three-dimensional
module constructing
unit **910**

two-dimensional
posture image
constructing unit
**920**

mapping establishing
unit
**930**

reconstructing unit
**940**

Figure9

1030

**1000**

900

**1010a**

**1010b**

**1020**

Figure 10

Europäisches
Patentamt

European
Patent Office

Office européen
des brevets

## EUROPEAN SEARCH REPORT

Application Number

EP 17 17 3576

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | HAIDER A M ET AL: "A 3D HUMAN FACE RECONSTRUCTION METHOD FROM CT IMAGE AND COLOR- PHOTOGRAPHS", IEICE TRANSACTIONS ON INFORMATION AND SYSTEMS, INFORMATION & SYSTEMS SOCIETY, TOKYO, JP, vol. E81-D, no. 10, 1 October 1998 (1998-10-01), pages 1095-1101, XP000786840, ISSN: 0916-8532 * abstract * * section 1, last paragraph * * section 2; figure 1 * * section 3; figure 2 * * section 5.2; figure 4 * * section 6; figure 8 * * section 7; figures 9-10 * ----- | 1-15 | INV. G06T7/33 |
| Y | US 2012/300895 A1 (KOIVISTO JUHA [FI] ET AL) 29 November 2012 (2012-11-29) * abstract * * paragraphs [0005] - [0006] * * paragraphs [0016], [0025]; figures 1-2 * ----- -/-- | 1-15 | TECHNICAL FIELDS SEARCHED (IPC) G06T |

The present search report has been drawn up for all claims

| Place of search | Date of completion of the search | Examiner |
|---|---|---|
| Munich | 21 August 2017 | Kollreider, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 17 17 3576

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CHUNG SOYOUNG ET AL: "Fusion of cone-beam CT and 3D photographic images for soft tissue simulation in maxillofacial surgery", PROGRESS IN BIOMEDICAL OPTICS AND IMAGING, SPIE - INTERNATIONAL SOCIETY FOR OPTICAL ENGINEERING, BELLINGHAM, WA, US, vol. 9786, 18 March 2016 (2016-03-18), pages 978629-978629, XP060069369, ISSN: 1605-7422, DOI: 10.1117/12.2217274 ISBN: 978-1-5106-0027-0 * sections 2-2.1; figures 1-2 * | 2,9 | |
| Y | Tim Rawlinson ET AL: "Fast, Approximate 3D Face Reconstruction from Multiple Views", , 1 January 2011 (2011-01-01), pages 1-10, XP055399900, Retrieved from the Internet: URL:https://www2.warwick.ac.uk/fac/sci/dcs/people/abhir_bhalerao/publications/bmvc_ws_2011_08_15.pdf [retrieved on 2017-08-21] * section 2, paragraph 1; figure 1 * * section 2.1, last paragraph; figure 3 * | 3,4,10,11 | TECHNICAL FIELDS SEARCHED (IPC) |

The present search report has been drawn up for all claims

| Place of search | Date of completion of the search | Examiner |
|---|---|---|
| Munich | 21 August 2017 | Kollreider, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 17 3576

This annex lists the patent family members relating to the patent documents cited in the above-mentioned European search report.
The members are as contained in the European Patent Office EDP file on
The European Patent Office is in no way liable for these particulars which are merely given for the purpose of information.

21-08-2017

| Patent document cited in search report | Publication date | Patent family member(s) | Publication date |
|---|---|---|---|
| US 2012300895 A1 | 29-11-2012 | CN 102781335 A | 14-11-2012 |
| | | CN 102811664 A | 05-12-2012 |
| | | EP 2531109 A1 | 12-12-2012 |
| | | EP 2531110 A1 | 12-12-2012 |
| | | JP 5805670 B2 | 04-11-2015 |
| | | JP 2013518648 A | 23-05-2013 |
| | | JP 2013518649 A | 23-05-2013 |
| | | KR 20120114392 A | 16-10-2012 |
| | | KR 20130028057 A | 18-03-2013 |
| | | KR 20160148040 A | 23-12-2016 |
| | | US 2012300895 A1 | 29-11-2012 |
| | | US 2012300900 A1 | 29-11-2012 |
| | | US 2016174916 A1 | 23-06-2016 |
| | | WO 2011095694 A1 | 11-08-2011 |
| | | WO 2011095695 A1 | 11-08-2011 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201610590192
- US 8126261 B2